# EUROPEAN PATENT APPLICATION

(11) **EP 4 723 376 A1**
(43) Date of publication of application: **08.04.2026**
(21) Application number: 24425048.6
(22) Date of filing: 07.10.2024
(51) Int. Cl.: H01Q 1/42, G01S 13/88, H01Q 15/00

(54) **FREQUENCY SELECTIVE SURFACE (FSS) FOR RADIO ALTIMETER 5G INTERFERENCE MITIGATION**

(71) Applicant: Rockwell Collins, Inc., Cedar Rapids, IA 52498 (US)
(72) Inventor: Manica, Luca, 38062 Arco (TN) (IT)
(74) Representative: Dehns

(57) **Abstract**

A radar altimeter is described herein comprising a transmitting antenna (11) and a receiving antenna (12), wherein said transmitting antenna is configured to transmit a first radio frequency "RF" signal (13) and wherein said first RF signal (13) is configured to be reflected back to said radar altimeter as a second, corresponding reflected signal (14). The receiving antenna (12) is configured to receive said second, corresponding reflected signal (14). The radar altimeter further comprises an antenna radome (60) provided relative to said transmitting antenna (11) and said receiving antenna (12) such that said first RF signal (13) passes through said radome (60) after being transmitted from said transmitting antenna (11) and wherein said second, reflected RF signal passes through said FSS radome before being received by said receiving antenna (12). The radome comprises a frequency selective surface "FSS" antenna radome (60).

## Description

### BACKGROUND

### FIELD

The present disclosure relates to interference mitigation relating to radio altimeters.

### DESCRIPTION OF RELATED ART

Radar altimeters (RA), operating at 4.2-4.4 GHz, are sensors onboard civil aircraft which provide a direct measurement of the clearance height of the aircraft over the terrain or other obstacles (i.e. the Above Ground Level - AGL - information). The RA systems' input is required and used by many aircraft systems when AGL is below 2500 ft. Any failures or interruptions of these sensors can therefore lead to incidents with catastrophic outcome, potentially resulting in multiple fatalities.

The radar altimeters also play a crucial role in providing situational awareness to the flight crew. The measurements from the radar altimeters are also used by Automatic Flight Guidance and Control Systems (AFGCS) during instrument approaches, and to control the display of information from other systems, such as Predictive Wind Shear (PWS), the Engine-Indicating and Crew-Alerting System (EICAS), and Electronic Centralized Aircraft Monitoring (ECAM) systems, to the flight crew.

The present application is aimed at mitigating interference to such radio altimeters.

### SUMMARY

A radar altimeter is described comprising a transmitting antenna and a receiving antenna, wherein said transmitting antenna is configured to transmit a first radio frequency "RF" signal and wherein said first RF signal is configured to be reflected back to said radar altimeter as a second, corresponding reflected signal and wherein: said receiving antenna is configured to receive said second, corresponding reflected signal and said radar altimeter further comprising: an antenna radome provided relative to said transmitting antenna and said receiving antenna such that said first RF signal passes through said radome after being transmitted from said transmitting antenna and wherein said second, reflected RF signal passes through said FSS radome before being received by said receiving antenna, wherein said radome comprises a frequency selective surface "FSS" antenna radome.

In some examples, said FSS antenna radome comprises a first set of metallic elements provided on a first surface of a first dielectric substrate.

In some examples, said FSS antenna radome comprises a second set of metallic elements provided on a second surface, which is opposite to said first surface of said first dielectric substrate.

In some examples, said FSS radome further comprises: a second dielectric substrate having a first surface that is facing said second surface of said first dielectric substrate.

In some examples, said second dielectric substrate has a second surface, opposite to said first surface, and further comprises a third set of metallic elements provided on said second surface of said second dielectric substrate, to thereby form a sandwich structure.

In some examples, said sandwich structure is repeated to provide a multi-layer FSS.

In some examples, said metallic elements are provided in the form of a grid.

In some examples, the grid is regular.

In some examples, said metallic elements have: a double square ring structure, a double circular ring structure, a double elliptical ring structure, a double hexagon ring structure a double cross ring structure, a double tripole ring structure, a double dipole ring structure or a double pentagon ring structure.

In some examples, the radar altimeter claim further comprises: an antenna dielectric substrate and a plurality of metallic antenna patches forming an antenna array provided on said antenna dielectric substrate, and said antenna dielectric substrate being positioned relative to said FSS radome such that said second, reflected RF signal passes through said FSS radome before reaching said metallic antenna patches and wherein said FSS radome covers both the antenna dielectric substrate and the patches completely.

A method of manufacturing a radar altimeter is also described herein, comprising: providing a radar altimeter having a transmitting antenna and a receiving antenna, wherein said transmitting antenna is configured to transmit a first radio frequency "RF" signal and wherein said first RF signal is configured to be reflected back to said radar altimeter as a second, corresponding reflected signal and wherein: said receiving antenna is configured to receive said second, corresponding reflected signal and positioning an antenna radome relative to said transmitting antenna and said receiving antenna such that said first RF signal passes through said radome after being transmitted from said transmitting antenna and wherein said second, reflected RF signal passes through said FSS radome before being received by said receiving antenna, wherein said radome comprises a frequency selective surface "FSS" antenna radome.

In some examples, the method further comprises: providing a first set of metallic elements on a first surface of a first dielectric substrate of said FSS radome.

In some examples the method further comprises providing a second set of metallic elements on a second surface, which is opposite to said first surface of said first dielectric substrate of said FSS radome.

In some examples, the method may further comprise providing a second dielectric substrate, having a first surface that is facing said second surface of said first dielectric substrate.

In some examples, the second dielectric substrate has a second surface, opposite to said first surface, and the method may further comprise providing a third set of metallic elements on said second surface of said second dielectric substrate, to thereby form a sandwich structure.

In some examples, the method of manufacture may comprise repeating said sandwich structure to provide a multi-layer FSS.

In some examples, the method may further comprise providing said metallic elements in the form of a grid. The grid may be regular or irregular.

In some examples, the method may further comprise providing said metallic elements such that they have: a double square ring structure, a double circular ring structure, a double elliptical ring structure, a double hexagon ring structure, a double cross ring structure, a double tripole ring structure, a double dipole ring structure or a double pentagon ring structure.

In some examples, the method may comprise forming an antenna array by providing a plurality of metallic antenna patches on an antenna dielectric substrate and positioning said antenna dielectric substrate relative to said FSS radome such that said second, reflected RF signal passes through said FSS radome before reaching said metallic antenna patches and covering completely both the antenna dielectric substrate and the patches with the FSS radome.

These and other features of the systems and methods of the subject disclosure will become more readily apparent to those skilled in the art from the following detailed description taken in conjunction with the drawings.

### BRIEF DESCRIPTION OF THE DRAWINGS

So that those skilled in the art to which the subject disclosure appertains will readily understand how to make and use the devices and methods of the subject disclosure without undue experimentation, embodiments thereof will be described in detail herein below with reference to certain figures, wherein:
Fig. 1 shows how a signal is transmitted and received by a radio altimeter.
Fig. 2a shows a traditional radio altimeter antenna system.
Fig. 2b shows a new type of radio altimeter antenna system having an FSS radome.
Fig. 3a shows how a signal is transmitted and received by a standard radio altimeter.
Fig. 3b shows how a signal is transmitted and received by a new type of radio altimeter having an FSS.
Fig. 4a shows a top view of an FSS.
Fig. 4b shows a top view of a single unit cell of the FSS of figure 4a.
Fig. 4c shows a top view of another single cell of an FSS.
Fig. 4d shows a side, cross-sectional view of the single unit cell of the FSS of figures 4a and 4b wherein the metallic elements are provided only on one surface of the substrate.
Fig. 4e shows a side, cross-sectional view of the single unit cell of the FSS of figures 4a and 4b wherein the metallic elements are provided on opposite surfaces of the substrate.
Fig. 5 shows a cross-sectional view of a plurality of FSS formed into a sandwich structure.
Fig. 6 shows different examples of basic FSS elements providing a band pass behaviour.
Fig. 7a shows the relevant circuit diagram for a substrate 60a having only a first set of FSS elements
Fig. 7b shows the relevant circuit diagram for a substrate 60a having only a first and second set of FSS elements.
Fig. 8 shows the geometrical descriptors of a double-ring FSS unit cell.

### DETAILED DESCRIPTION

Reference will be made to the drawings wherein like reference numerals identify similar structural features or aspects of the subject disclosure.

Radar altimeters are the only airborne sensors providing a direct measurement of Above Ground Level (AGL) altitude.

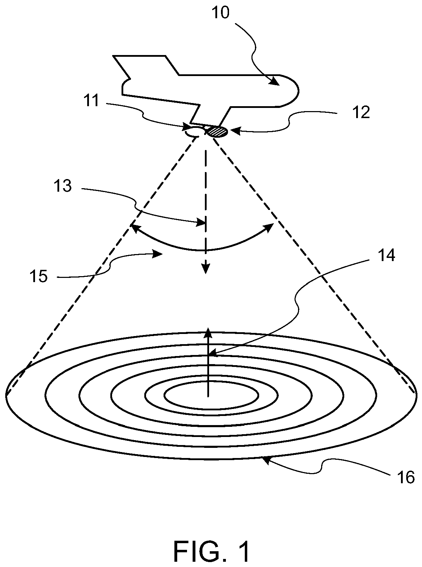

As is known in the art, and as shown in Figure 1, a radar altimeter provided on an aircraft has two antenna systems: one transmitting 11 and one receiving 12. The transmitting antenna transmits a first radio frequency (RF) signal 13 having a beamwidth 15 from an aircraft 10 down to the ground 16 and the reflected signal 14 is received by the receiving antenna 12.

Radar altimeters operate in the global Aeronautical Radio Navigation Service (ARNS) from 4.2 to 4.4 GHz. The radio altimeter antenna typically would comprise an antenna radome (not shown in figure 1) that is a structural, weatherproof enclosure that protects the radar antenna systems 11 and 12. The radome is constructed of a material that is transparent to radio waves. Radomes therefore protect the antenna from weather factors and also conceal antenna electronic equipment from view.

Radio altimeters provide critical inputs to a wide range of aircraft systems and functions, including, for example, in civil aviation: terrain awareness and warning systems (TAWS), full-automatic landing, manual landing, take-off (auto-pilot, flight control laws, auto-throttle, wind shear surveillance and cockpit display (primary and vertical).

There is a major risk, however, that 5G telecommunications systems in the 3.7-3.98 GHz band may cause harmful interference to radar altimeters on all types of civil aircraft, including commercial transport airplanes; business, regional, and general aviation airplanes; and both transport and general aviation helicopters. If there is no proper mitigation, this risk has the potential for broad impacts to aviation operations globally in regions where the 5G network is being implemented next to the 4.2-4.4 GHz frequency band. The examples described and shown herein therefore aim to mitigate this risk.

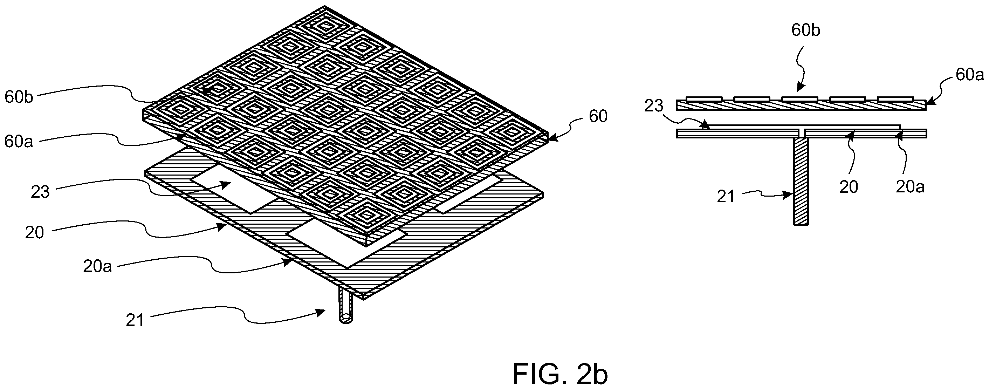

This is achieved by modifying or replacing the standard antenna radome 25 with a frequency selective radome composed of a set of metallic elements 60a provided on a surface of a dielectric substrate 60b in the form of a grid as described below in greater detail. The grid shown in figure 2b is regular but it may also be irregular. The set of metallic elements 60a are provided on a first surface of first dielectric support 60 as shown in Figure 2b.

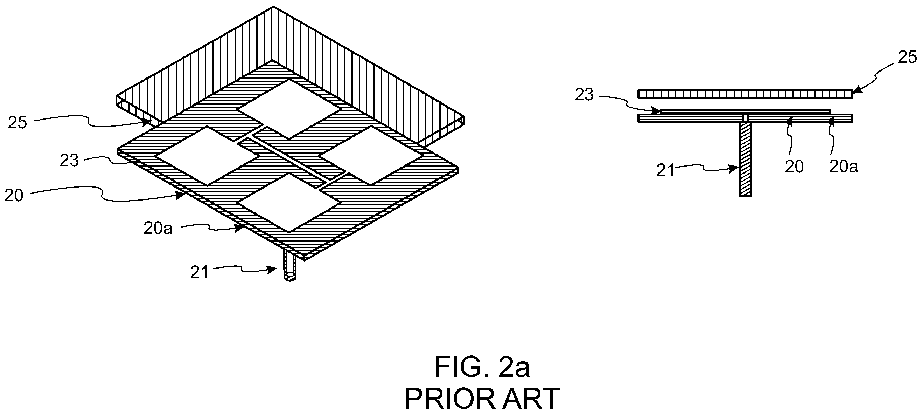

Figure 2a depicts a traditional radio altimeter antenna system (i.e. an antenna radome 25 in combination with an antenna 20). The radio altimeter antenna 20 comprises a plurality of metallic antenna patches 23 provided on an antenna dielectric substrate 20a. In the example shown in figure 2a, the radio altimeter antenna 20 comprises four metallic antenna patches 23 (this is known as the antenna array), provided on the surface of the antenna dielectric substrate 20a. A coaxial cable 21 is provided for electrically connecting the antenna array 23 to a power source or to a signal processing stage. The radome 25 is provided upon/proximate to the antenna patches 23 and it covers both the antenna 20 and the patches 23 completely.

Figure 2b shows one proposed solution for mitigating the impact of 5G signal on the radio altimeter system. In this example, the same features of Fig 2a are shown and referenced using the same numbers, however, the traditional, electrically thin radome 25 is replaced by a frequency selective surface, FSS 60, comprising a dielectric substrate 60a and a regular grid of metallic elements 60b having a double square ring structure. In other examples, the grid 60b may be irregular and/or the FSS may have metallic elements provided in a design other than a double square ring structure.

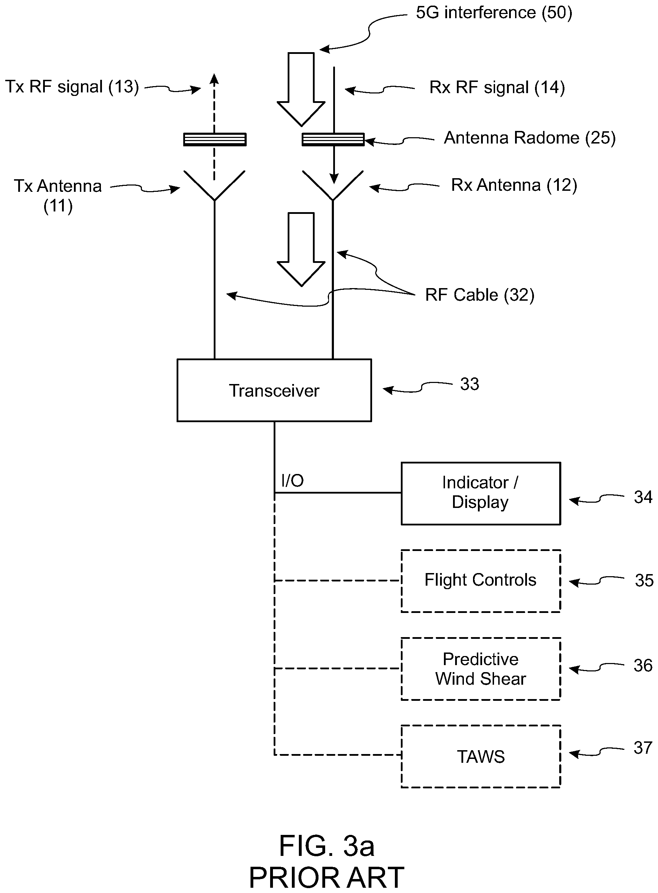

Figure 3a shows how a known radio altimeter, which has a standard antenna and radome, functions. A signal is transmitted from the transceiver 33 to the antenna 11 and is converted into an RF signal 13 which then passes through the radome 25 and moves to the ground 16. An RF cable 32 may be used to connect the transceiver 33 to the RF antenna. The first transmitted signal 13 is then reflected from the ground 16 and sent back to the receiving antenna 12. This signal may, however, additionally comprise interference caused by a 5G signal 50, as shown in figure 3a. The transceiver 33 may comprise an RA filter, however, with standard systems, the RA filter is only able to attenuate 5G interference of a few dB (e.g. 24 dB/octave) as such filters were designed before the creation of 5G signals. The transceiver 33 includes a signal processor that computes the Above Ground Level (AGL) using the reflected signal 14. Certain information such as Flight controls 35, Predictive Wind Shear 36 or Terrain Avoidance and Warning System (TAWS) 37.is sent to an indicator / display 34 or to other avionics subsystems. Since the reflected signal 14 contains 5G signal 50 the computed AGL may be incorrect leading to a wrong display indication and avionics system malfunctioning.

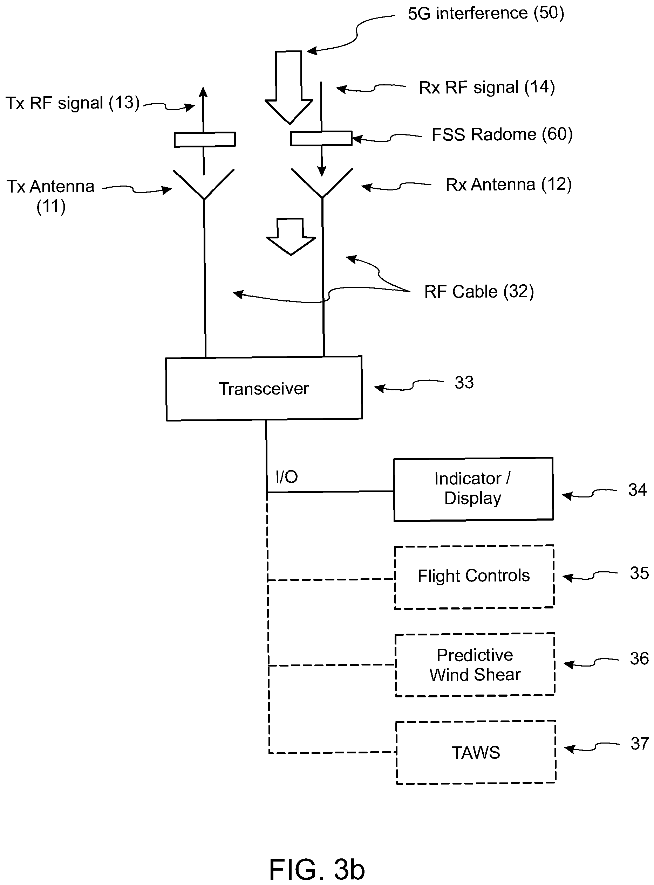

In contrast to this, figure 3b shows how a new radio altimeter functions when a frequency selective surface 60 is provided instead of the radome 25 as described above with reference to figure 2b. This provides a more resilient radio altimeter than that shown in figure 3a. As can be seen in figure 3b, the first RF signal is transmitted from the transceiver 33 and transmitting antenna system 11 through the FSS radome 60 and to the ground 16. In this example, an RF cable 32 is shown as being used to connect the transceiver to the RF antenna, however, other means may be used to achieve this connection, such as wireless. The reflected signal 14 passes through the FSS radome 60 and is collected by the receiving antenna system 12. The frequency selective surface 60 is positioned in proximity / upon the transmitting and receiving antenna systems in such a way that the reflected signal (containing the 5G signal, too) must first pass through the FSS before reaching the antenna 12.

By adding the FSS 60 in this position relative to the antenna 11 and 12, no further modifications are required to be made to the existing radio altimeter system, other than to replace the traditional radome 25 with the FSS 60. This therefore provides a low-cost realization of the mitigation of the 5G interference and allows for easy installation. This FSS 60 thereby reduces the interference of the 5G signal 50 as it is reflected-back to the antenna 20.

After the antenna 12 has received the reflected signal 14, the signal is processed by the signal processor in the transceiver 33.

In the examples described herein, the FSS 60 has a band pass response of 200 [MHz] centered in *f_{P}* = 4.3 [*GHz*]. The FSS 60 provides a linear phase response in its band-pass spectrum. The FSS 60 provides a band stop response outside the 4.2-4.4 [GHz] with higher attenuation in the 3.70 - 3.98 [GHz] frequency range (US 5G spectrum). The FSS 60 response is interference polarization and angle independent. According to examples, the FSS 60 covers the entire transmitting/receiving surface of the RA antenna systems 11 and 12.

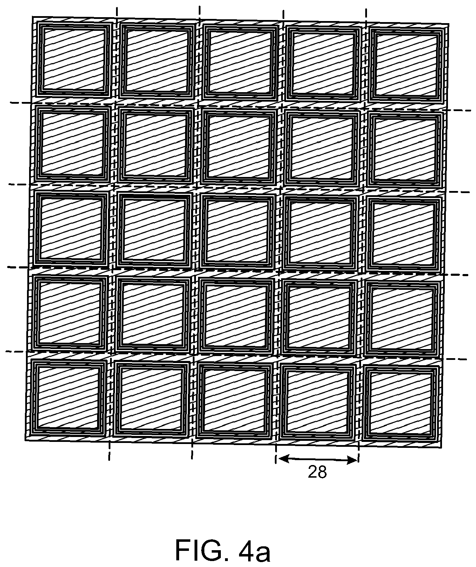

Figure 4a shows an example of a top view of an FSS 60 for RA 5G interference mitigation. An FSS 60 may be described as a set of simple elements 28 arranged on a surface of a dielectric material 60a in the form of a grid. The FSS 60 comprises a plurality of individual frequency selective elements 28, or unit cells, each of which are formed from a metal material 60b provided on the surface of the first dielectric material 60a as described above with reference to figure 2b. That is, a plurality of unit cells 28 may be provided, each of which may comprise a metal cell 60b provided on a surface of the dielectric substrate 60a of the FSS 60.

In some examples, the FSS 60 may be a set of identical elements lying on or embedded in a multi-medium structure and arranged on a periodic grid. The FSS 60 is configured to behave as a spatial filter, reflecting the incident EMI field in some frequency bands, whilst being transparent in the RA working band, the filter response is designed by selecting the geometry of the unit cell, its periodicity, thickness and electrical properties of the medium.

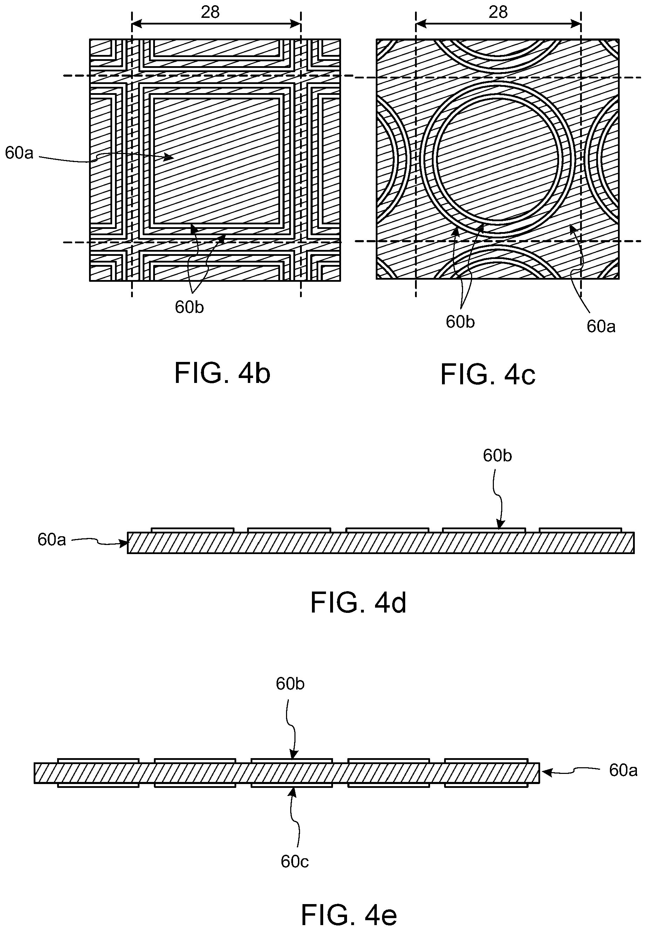

The cell dimension is shown as 28 in figure 4a. Figure 4b shows a top view of a single cell of figure 4a. Figure 4c shows a single cell when the unit element is a double-circular ring. Figure 4d shows a cross-sectional view of the cell of figure 4b. A dielectric layer 60a is shown, as well as the metallic element 60b. Figure 4e shows a cross-section view of an FSS 60 where the unit cells are located on top (60b) or bottom (60c) of a dielectric layer 60a.

In some examples the FSS 60 may comprise a double-square ring (Figure 4b) cell provided on a first surface of a single layer substrate, acting as a band-pass filter in the 4.2-4.4 [GHz] band. In other examples, the FSS may comprise a double-circular (Figure 4c) or a double elliptical ring cell (not shown) lying on a first surface of a single layer substrate.

In other examples the FSS 60 may comprise a double-square ring (Figure 4b), double-circular ring (Figure 4c) or double elliptical ring provided on opposite surfaces of a single layer substrate. For example, as shown in figure 4e, a first set of unit cells 60b are provided on the upper surface of the substrate 60a and a second set of unit cells 60c are provided on the lower surface of the single layer substrate 60a.

The number of unit cells composing the FSS 60 is selected such that they completely cover the RA antenna systems.

The FSS response is dependent on the shape of the metallic element(s) of the unit cell (i.e. a square ring, a double square ring. a ring, a dipole, a tripole, a Jerusalem cross, a cross, patch) as well as the geometrical parameters of the shape (e.g. the patch side length and the inter-element spacing for an FSS made by square patches).

In some examples, such as those described above with reference to figures 4a-e, the FSS 60 may be formed as a single layer structure.

In other examples, the FSS 60 may be formed as a sandwich structure.

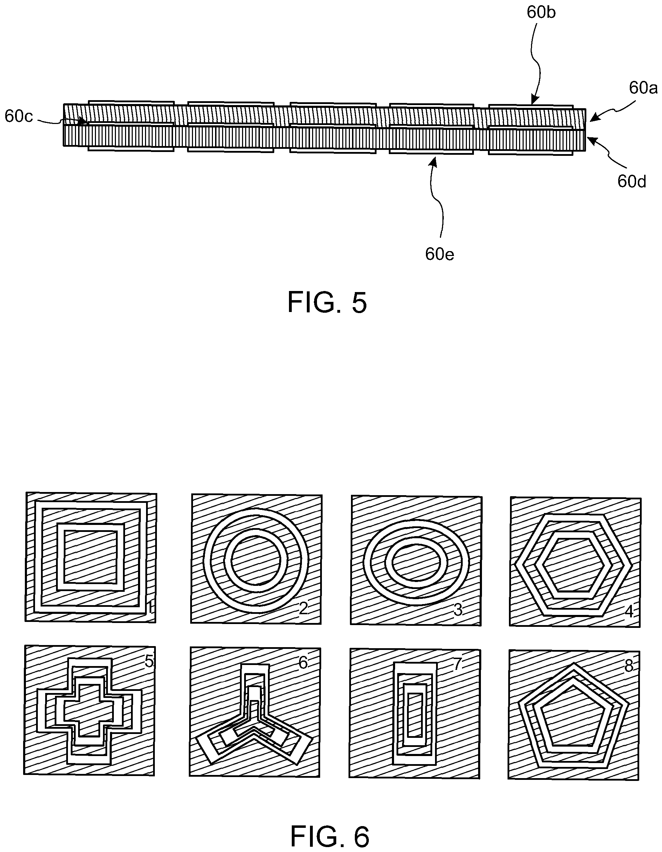

For example, in figure 5 a sandwich structure is shown. In this example, a first set of FSS elements 60b are provided on the upper surface of a first dielectric layer 60a. The first dielectric layer 60a may face and be in contact on its opposite, lower surface, with a second dielectric layer 60d and the second set of FSS elements 60c may be provided between the two dielectric layers 60and 60d. A third set of FSS elements 60e may be provided on the lower surface of the second dielectric layer 60d. In some examples, this structure may be repeated to provide multiple layers that are stacked together in this way to provide a multi-layer FSS 60.

Figure 6a shows a plurality of different patterns which may be used to form a single element unit 60. For example, the shape of each individual FSS element 60 may be a double square ring 1, a double circular ring 2, a double elliptical ring 3, a double hexagon ring 4, a double cross ring 5, a double tripole ring 6, a double dipole ring 7, a double pentagon ring 8. Whatever the shape the recurring element is the double ring structure. A double square ring FSS cell is shown in figure 6 - element 1.

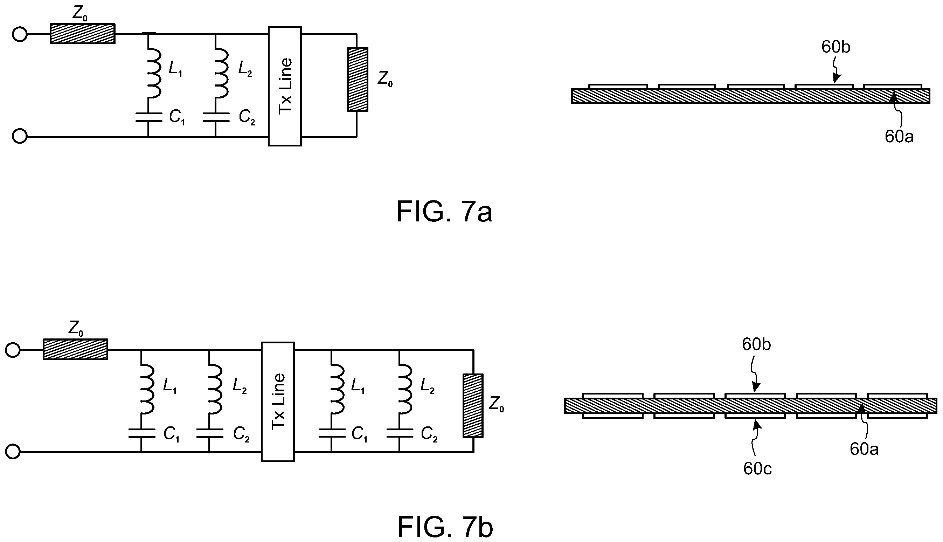

The relevant circuit diagram for a substrate 60a having only a first set of double-ring FSS elements is shown in figure 7a. The relevant circuit diagram for a substrate 60a having only a first and second set of FSS elements is shown in figure 7b. As a general rule, the double ring arrangement is equivalent to a series of capacitor and inductor connected in parallel while the dielectric is modelled as a transmission line.

In addition to the advantage described above, in relation to the ease of fit and manufacture, the FSS 60 described herein shields the RA system from 5G interference up to 25 [dB] and provides an average attenuation of 14 [dB] in the 3.7-3.98 [GHz] range, while in the 3.30-3.55 [GHz] range the maximal attenuation is 18 [dB] and the average attenuation is 13 [dB]. The structure is low cost since it considers an arrangement of metal cells lying on a dielectric substrate with minimal modification of the RA system, but instead can be used to replace the standard antenna cover, radome. This can be easily built using traditional manufacturing techniques and positioned using current installation procedures. The double-ringed structure is easily tuned to deal with substrates with different electrical properties or thickness.

A method of manufacturing the different examples of radar altimeters described above may include providing a transmitting antenna 11 and a receiving antenna 12. As described above, the transmitting antenna 11 is configured to transmit a first radio frequency "RF" signal 13 and the first RF signal is configured to be reflected to the radar altimeter as a second, corresponding reflected signal 14. The receiving antenna 12 is configured to receive the second, corresponding reflected signal 14. The method of manufacture includes providing and positioning the FSS antenna radome 60 described herein relative to the transmitting antenna 11 and the receiving antenna 12 such that the first RF signal 13 passes through the FSS radome 60 after being transmitted from the transmitting antenna 11 and such that the second, reflected RF signal 14 passes through the FSS radome 60 before being received by the receiving antenna 12 .

The method may further include providing a first set of metallic elements 60b on a first surface of a first dielectric substrate 60a of the FSS radome 60 as described above.

The method may further include providing a second set of metallic elements 60 on a second surface, which is opposite to the first surface, of the first dielectric substrate 60a of the FSS radome 60.

The method of manufacture may further include providing a second dielectric substrate 60d, having a first surface that is facing the second surface of the first dielectric substrate 60a.

The second dielectric substrate 60d may have a second surface, opposite to the first surface, and the method of manufacture may further include providing a third set of metallic elements 60e on the second surface of the second dielectric substrate 60d, to thereby form a sandwich structure.

The method of manufacture may also include repeating this sandwich structure once, or multiple times to provide a stacked structure, or multi-layer FSS 60.

The method of manufacture may further include providing the metallic elements 60b,c,e in the form of a grid. The grid may be regular.

The method of manufacture may include forming the metallic elements 60b,c,e such that they have: a double square ring structure 1, a double circular ring structure 2, a double elliptical ring structure 3, a double hexagon ring structure 4, a double cross ring structure 5, a double tripole ring structure 6, a double dipole ring structure 7 or a double pentagon ring structure 8.

The method of manufacture may also include providing an antenna dielectric substrate 20a and a plurality of metallic antenna patches 23, thereby forming an antenna array provided on the antenna dielectric substrate 20a. The method may further include positioning the antenna dielectric substrate 20a relative to the FSS radome such that the second, reflected RF signal passes through the FSS radome before reaching the metallic antenna patches 23 and wherein the FSS radome covers both the antenna dielectric substrate 20a and the patches 23 completely.

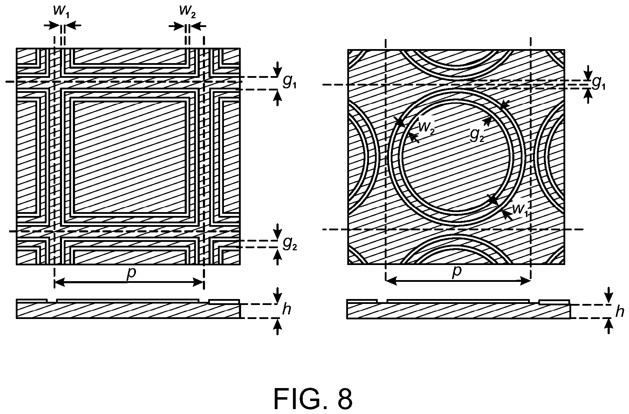

The FSS response depends on the dimensions of the geometrical parameters composing the unit cell shape. The double-ring structure (or other shape, i.e., square, circle, cross, etc.) provides the band-pass behavior but the center frequency and bandwidth depend on the dimensions: i.e. width of the rings, gap between the rings (inner and outer), dielectric thickness and dielectric electrical performance. The dimensions shown in the table below are exemplary and relate to the dimensions shown in figure 8.

| **Parameter** | **Meaning** | **Dimensions (mm)** |
|---|---|---|
| *h* | Dielectric thickness | 0.5-2.0 |
| *p* | Cell size | 10-20 |
| *g*₁ | Gap between outer rings | 1.0-2.0 |
| *g*₂ | Gap between the inner and outer ring | 0.3-0.8 |
| *w*₁ | Width of the outer ring | 0.2-0.7 |
| *w*₂ | Width of the inner ring | 0.2-0.7 |

## Claims

1. A radar altimeter comprising a transmitting antenna (11) and a receiving antenna (12),
wherein said transmitting antenna is configured to transmit a first radio frequency "RF" signal (13) and wherein said first RF signal (13) is configured to be reflected back to said radar altimeter as a second, corresponding reflected signal (14) and wherein:
said receiving antenna (12) is configured to receive said second, corresponding reflected signal (14) and
said radar altimeter further comprising:
an antenna radome (60) provided relative to said transmitting antenna (11) and said receiving antenna (12) such that said first RF signal (13) passes through said radome (60) after being transmitted from said transmitting antenna (11) and wherein said second, reflected RF signal passes through said radome before being received by said receiving antenna (12),
wherein said radome comprises a frequency selective surface "FSS" antenna radome (60).

2. The radar altimeter of claim 1 wherein said FSS antenna radome (60) comprises a first set of metallic elements (60b) provided on a first surface of a first dielectric substrate (60a).

3. The radar altimeter of claim 2, wherein said FSS antenna radome (60) comprises a second set of metallic elements (60c) provided on a second surface, which is opposite to said first surface, of said first dielectric substrate (60a).

4. The radar altimeter of claim 3, wherein said FSS radome (60) further comprises: a second dielectric substrate (60d) having a first surface that is facing said second surface of said first dielectric substrate (60a).

5. The radar altimeter of claim 4, wherein said second dielectric substrate (60d) has a second surface, opposite to said first surface, and further comprises a third set of metallic elements (60e) provided on said second surface of said second dielectric substrate (60d), to thereby form a sandwich structure.

6. The radar altimeter of claim 5, wherein said sandwich structure is repeated to provide a multi-layer FSS (60).

7. The radar altimeter of any of claims 2 to 6, wherein said metallic elements (60b, c, e) are provided in the form of a grid.

8. The radar altimeter of claim 7, wherein said grid is regular.

9. The radar altimeter of any of claims 2 to 8, wherein said metallic elements (60b,c,e) have: a double square ring structure (1), a double circular ring structure (2), a double elliptical ring structure (3), a double hexagon ring structure (4), a double cross ring structure (5), a double tripole ring structure (6), a double dipole ring structure (7) or a double pentagon ring structure (8).

10. The radar altimeter of any preceding claim further comprising:
an antenna dielectric substrate (20a) and a plurality of metallic antenna patches (23) forming an antenna array provided on said antenna dielectric substrate (20a), and said antenna dielectric substrate (20a) being positioned relative to said FSS radome (60) such that said second, reflected RF signal passes through said FSS radome before reaching said metallic antenna patches (23) and wherein said FSS radome (60) covers both the antenna dielectric substrate (20a) and the antenna patches (23) completely.

11. A method of manufacturing a radar altimeter, comprising:
providing a radar altimeter having a transmitting antenna (11) and a receiving antenna (12),
wherein said transmitting antenna is configured to transmit a first radio frequency "RF" signal (13) and wherein said first RF signal (13) is configured to be reflected back to said radar altimeter as a second, corresponding reflected signal (14) and wherein:
said receiving antenna (12) is configured to receive said second, corresponding reflected signal (14) and
positioning an antenna radome (60) relative to said transmitting antenna (11) and said receiving antenna (12) such that said first RF signal (13) passes through said radome (60) after being transmitted from said transmitting antenna (11) and wherein said second, reflected RF signal passes through said FSS radome before being received by said receiving antenna (12),
wherein said radome comprises a frequency selective surface "FSS" antenna radome (60).

12. The method of claim 11, further comprising: providing a first set of metallic elements (60b) on a first surface of a first dielectric substrate (60a) of said FSS radome (60).

13. The method of claim 12, further comprising: providing a second set of metallic elements (60c) on a second surface, which is opposite to said first surface of said first dielectric substrate (60a) of said FSS radome (60).

14. The method of claim 13, further comprising: providing a second dielectric substrate (60d), having a first surface that is facing said second surface of said first dielectric substrate (60a).

15. The method of claim 14, wherein said second dielectric substrate (60d) has a second surface, opposite to said first surface, and further comprising providing a third set of metallic elements (60e) on said second surface of said second dielectric substrate (60d), to thereby form a sandwich structure.
